# EUROPEAN PATENT APPLICATION

(11) **EP 1 953 887 A2**
(43) Date of publication of application: **06.08.2008**
(21) Application number: 08100626.4
(22) Date of filing: 18.01.2008
(51) Int. Cl.: H02G 3/08

(54) **Box for wall mounting electrical apparatuses and modular arrangement comprising said box**

(30) Priority: 05.02.2007 IT RM20070053
(71) Applicant: BTICINO S.P.A., 20154 Milano (IT)
(72) Inventor: Sensi, Lucio, I-21040, Venegono Superiore - Varese (IT); Roncato, Danilo, I-21049, Tradate - Varese (IT)
(74) Representative: Carangelo, Pierluigi

(57) **Abstract**

A box (1) for electrical equipment is described, comprising a box-shaped body including a side wall (3a, 3b, 3c, 3d), and a bottom wall (4) that is joined to the side wall (3a, 3b, 3c, 3d), the side wall (3a, 3b, 3c, 3d) extending around an inlet port (2) of the box and defining an inner space (5) cooperating with said port (2) along with the bottom wall (4).

The box is characterized in that it includes defining means (10) that are suitable to define at least one of side wall (3b, 3d) removable portion in order to put a further box (21) beside the box (1), in a modular manner and on the side of said removable wall portion.

## Description

The present invention relates to the technical field of electrical installations in houses and offices and, more particularly, it relates to a box for wall mounting electrical apparatuses as defined in the preamble of the first claim.

To the purposes of the present description, by electrical apparatuses is meant, in general, any electrical means or device which is part of electrical installations in civil buildings and the like, and usually intended to be mounted, for example flush-mounted, against walls or panels of such buildings.

As is known, most of the above-mentioned electrical equipment is usually wall mounted, either singularly or in modular combination with other electrical equipment, using composite mounting structures generally including:
- a box intended to be flush-installed against a wall;
- an electrical equipment-mounting (or support) frame securable to the box; and
- a covering plate removably securable to the frame.

The boxes of the above-indicated type, typically indicated with the term "boxes to be flush-mounted", are typically made in rigid synthetic plastic material and have been long known by now and are widely diffused.

Currently, due to the dimension variability of the electrical apparatuses that can be installed by wall mounting, or due to the overall dimension variability of modular combinations of electrical apparatuses to be installed against wall in the same installation site, the manufacturers are forced to keep on producing lines of boxes with different dimensions.

An object of the present invention is to provide a box to be flush-mounted which allows a manufacturer reducing the variety of boxes that he/she is forced to keep on producing for the above-described reasons.

Such object is achieved by a box as defined in the annexed first claim in the most general form thereof, and in the dependant claims in some particular embodiments.

A further object of the present invention is to provide a kit of parts as defined in claim 9.

The invention will be better understood from the following detailed description of embodiments thereof given by way of example and, therefore, not limiting at all, with reference to the annexed Figures, in which:
- Fig. 1 shows an axonometric view of a particularly preferred embodiment of a box for wall mounting electrical apparatuses in accordance with the present invention;
- Fig. 2 shows a plan view of the box in Fig. 1;
- Fig. 3 shows a view of the box in Fig. 1, from which two opposite side walls have been removed;
- Fig. 4 shows a view of a box, similar to that in Fig. 1, from which a side wall has been removed;
- Fig. 5 shows an example of a modular combination of boxes; and
- Fig. 6 shows a side-by-side positioning device which can be advantageously employed in order to connect two boxes with portions of adjacent side walls removed.

In the Figures, equal or similar elements will be indicated with the same reference numerals.

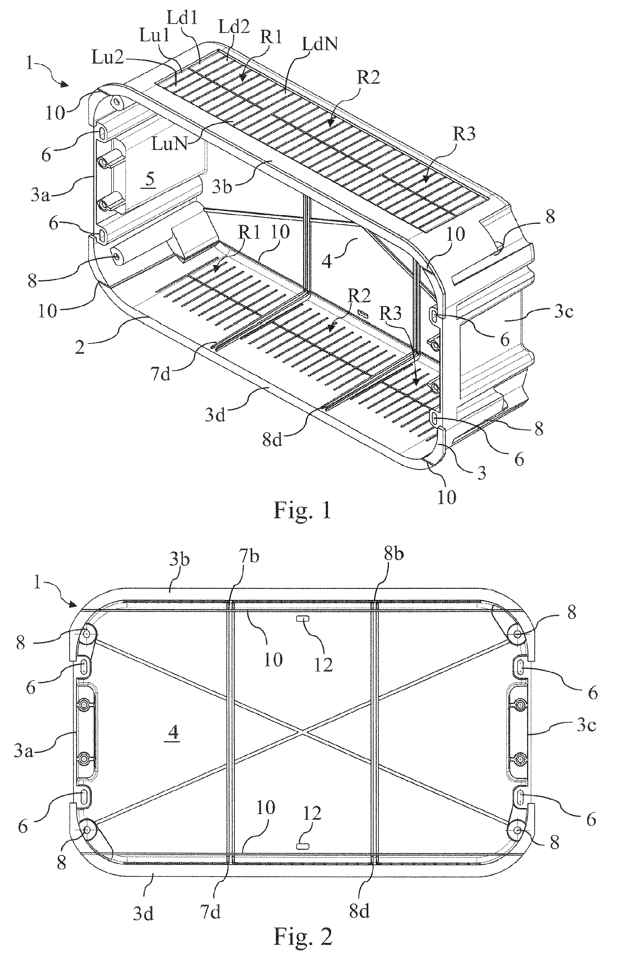

With reference to the Figures 1 and 2, a box for wall mounting electrical apparatuses is generally indicated with 1, the apparatuses are not shown in the Figures since they are conventional.

The box 1 can be indifferently intended to be both enclosed in a masonry wall, and intended to be enclosed in an opening which is obtained in a hollow wall panel, for example made of plasterboard panels. In the latter case, the box 1 can be provided with suitable means suitable to allow the securing of the box 1 to the panel. In the example of Fig. 1, such securing means include recesses 8 facing the outer part of the box 1 and suitable to house securing means *(per* se known and not shown in the Figures) in the shape of screws having a head which is actionable from inside the box 1, and operatively connected to a respective tooth. Such tooth can go backward or forward by sliding on the screw externally to the box 1, so as to interfere with an edge portion of the panel surrounding the opening of the panel in which the box 1 is intended to be installed.

The box 1 comprises a box-shaped body, for example, made in synthetic plastic material by moulding, having an inlet port 2 and formed by a side wall 3 extending around such port 2, and by a bottom wall 4 joined to the side wall.

The side wall 3 and the bottom wall 4 define an inner space 5 cooperating with the inlet port 2.

In the particular example shown, the port 2 and the bottom wall 4 have an essentially quadrangular shape, more precisely rectangular, and the side wall 3 includes four side walls two-by-two opposing 3a, 3c and 3b, 3d. In the example shown in Figure 1, two opposite side walls 3b, 3d, or long walls, have an extension which is higher than that of the two remaining opposite walls 3a, 3c, or short walls.

In an embodiment variation not shown in the Figures, the box 1 could have the port 2 and the bottom wall 4 of an essentially circular shape; in this case, the side walls 3a, 3b, 3c, 3d would virtually form a single continuous side wall 3 of an essentially cylindrical shape.

In the example, the box 1 is provided with holes or ducts 6 in order to secure an equipment-mounting support frame -not shown in the Figures- to the box 1. A support frame and the possible securing modes of such frame to a box 1 have belonged for a long time to the knowledge of those skilled in the art, and for this reason they will be not further detailed in the present description.

In a possible, non-limiting embodiment, the box 1 is provided with at least one pair of opposite ribs 7b, 7d and 8b, 8d extending parallel and slightly projecting inside the space 5 on opposite side walls 3b, 3d in order to constitute receiving guides of a partition wall (not shown in the Figures) of the space 5.

In the box 1 illustrated in the Figures, two opposite side walls 3d, 3b are equipped with means R1, R2, R3 suitable to allow the passage of tubes and/or electrically conductive cables between the box 1 outer and inner parts, in order to couple such tubes and/or conductive cables to the box 1. The tubes and/or cables are not illustrated in the Figures, since well known to those skilled in the art. For instance, the tubes can be standard corrugated tubes of the type widely used in the electrical installations of civil buildings.

In a particularly advantageous embodiment, not to be intended as limiting, such passage means R1, R2, R3 are implemented in coupling regions R1, R2, R3 of the walls 3b, 3d, each coupling region consisting in at least one comb of flexible tongues Ld1, ..., LdN, Lu1,..., LuN. The flexible tongues Ld1 , ... , LdN, Lu1,..., LuN have a free end portion and an opposite end portion constrained to the remaining part of the walls 3b, 3d. More preferably, each of the coupling regions R1, R2, R3 includes a first and a second combs of tongues mutually parallel and opposed.

Inside each comb, the tongues Ld1, ..., LdN, Lu1,..., LuN are independently flexible one to the other in order to define, in the coupling region which they belong to, through openings suitable to allow the passage and the holding of the tubes and/or conductive cables. Virtually, the tongues Lu1, ..., LuN, Ld1, ..., LdN are such as to flex when a tube or a conductive cable is inserted inside the box 1.

It shall be noticed that, according to the dimensions thereof, a tube to be coupled to the box 1 will require the inward flexion of a higher or lower number of tongues. Instead, the remaining tongues, also inside a same coupling region, will maintain their own rest position, so as to allow the coupling at these of further tubes or cables.

It shall be taken into account that, alternatively, or in addition to the particular above-described coupling means, those skilled in the art, according to their knowledge, will be able to provide coupling means of a different type in a box in accordance with the present invention.

Advantageously, the box 1 includes defining means 10 suitable to define at least one side wall portion 3b, 3d removable from the box 1 in order to put a further box beside the box 1, in a modular manner, and on the side of said removable wall portion.

Preferably, such defining means 10 at least partially run across the bottom wall 4 of the box 1. More preferably, the defining means include:
- a central portion running across the bottom wall 4; and
- two opposite end portions going up from the bottom wall 4 on the box 1 side wall 3, up to the port 2 of such box, in order to define the removable side wall portion.

In a particularly advantageous embodiment, the defining means 10 include at least one preferably continuous groove 10 defining such removable wall portion 3b, 3d and which is such as to act as a guide for a cutting tool which can be employed to remove said side wall portion 3b, 3d. However, alternatively to the groove 10, guide means of an equivalent type can be provided.

Preferably, the groove 10 is obtained in the thickness of the box 1 body, so as to promote the removal of said removable side wall portion 3b, 3d.

Suitably, such groove 10 is obtained on a box 1 surface which is arranged on the box 1 side facing the inner space 5.

In the particular example shown in the Figures, the box 1 includes, in a non-limiting manner, two essentially completely removable opposite side walls 3b, and 3d. The defining means include a first groove 10 which, running across the bottom wall 4, extends essentially parallel to the removable side wall 3b, and a second groove 10 which, running across the bottom wall 4, extends essentially parallel to the removable wall 3d. It shall be noticed that, virtually, each groove 10 includes a central portion, which crosses the bottom wall 4, at a low distance from the removable wall, and it further includes two opposite end portions going up from the bottom wall 4 on the box 1 side wall 3, up to the port 2 of such box, in order to define the removable side walls 3b, 3d.

In a particularly advantageous while non-limiting embodiment, the box 1 bottom wall 4 is provided with at least one hole 12 arranged in the proximity of the defining means 10. In the particular example shown in the Figure 2, it shall be noticed that a pair of holes 12 is provided in the bottom wall 4, each arranged in the proximity of a respective groove 10. The usefulness of the holes 12 will be explained more in detail below.

It will be appreciated from what has been described above that, thanks to the presence of the defining means, by removing one or more portions of the box 1 side wall, it is possible to put the box 1 beside one or more boxes of an equivalent type by implementing modular compositions including two or more boxes. It shall be noticed that, in the particular embodiment in which the defining means are in the shape of grooves 10, or equivalent guide means, the removal of a box side wall portion can be easily obtained in the field by an installer who uses a manual cutting tool, such as, for example, a common cutter.

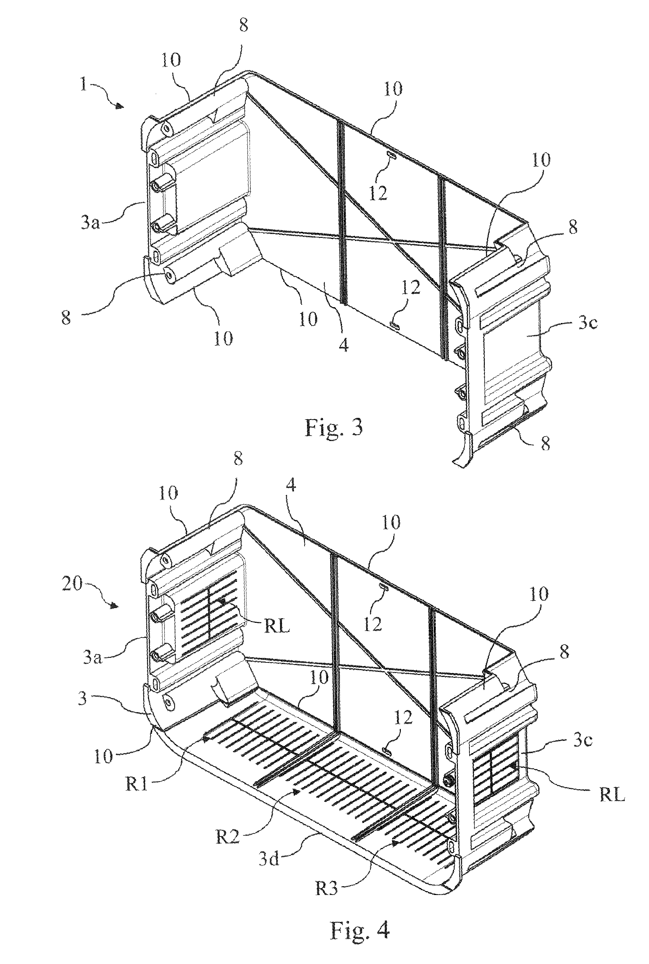

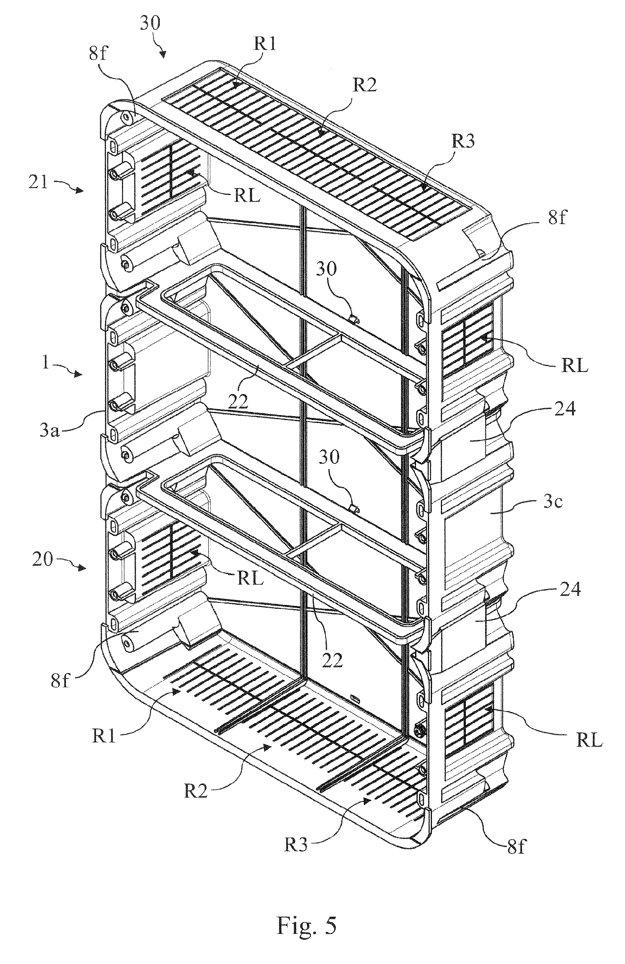

In the Figure 3, the same box 1 of the Figures 1 and 2 is illustrated, from which both the removable side walls 3b and 3d have been removed, in order to obtain a modular combination of boxes in which such box 1 is sandwiched between two further boxes (see, for example, the modular combination illustrated in the Figure 5).

In the Figure 4 a box 20 is illustrated which is completely similar to the box 1 hitherto described, with the only exception, given by way of example only, that such box 20 is provided with coupling regions RL also on the side walls 3a, 3c. By employing the baffle 10, the side wall opposite the side wall 3d has been removed from the box 20.

In the Figure 5, a modular combination 30 of three stacked boxes is illustrated by way of example, including the box 1 as illustrated in the Figure 3, the box 20 as illustrated in the Figure 4, and a further box identical to the box 20, from which only one side wall portion has been removed, as already described with reference to the box 20 of Fig. 4.

Again, with reference to the Fig. 5, in a particularly advantageous embodiment and which does not have to be intended as limiting, in the modular combination of two or more boxes, the use of a side-by-side positioning device 22 is provided, which is suitable to connect and keep two adjacent boxes together by cooperating with side wall portions thereof adjacent to the side wall portions removed therefrom, also acting as a structural reinforcing member for the boxes combination.

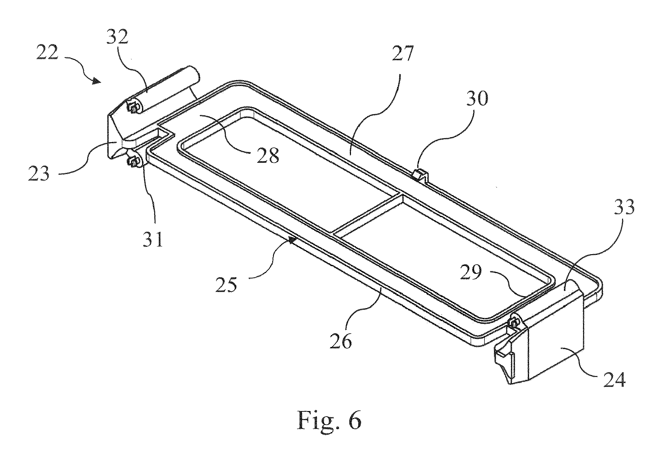

A particularly preferred embodiment of a side-by-side positioning device 22 is illustrated in the Figure 6. Such side-by-side positioning device 22, intended to be sandwiched between two adjacent boxes, includes opposite coupling members 23, 24, each of which is such as to make a side wall portion of one of the two boxes and a correspondent side wall portion of the other box mutually integral.

For example, with reference to the boxes represented in the Figures 3 and 4, the coupling member 23 includes a first small cylinder 31 suitable to be inserted inside the duct 8 of the box 20 side wall 3a, and a second small cylinder 32 suitable to be inserted inside the duct 8 of the box 1 wall 3a, so as to make the box 20 wall 3a and the box 1 wall 3a mutually integral. The opposite coupling member 24 includes similar small cylinders (of which, only the small cylinder 33 is visible in Figure 6) suitable to be inserted in the duct 8 of the box 20 side wall 3c and in the duct 8 of the box 1 side wall 3c, respectively. It shall be advantageously noticed, in the particular embodiment described above, which does not have to be intended as limiting, that the coupling members 23 and 24 of the side-by-side positioning device 22 are such as to cooperate with ducts 8 which, as previously described, are provided in the side walls of the boxes to be put side by side for the securing of the boxes to a panel. In fact, in the event that a modular combination of boxes is implemented starting from the boxes, such as, for example, the one illustrated in Figure 5, it is sufficient that only the ducts 8f arranged at the four vertexes of the resulting modular combination are employed to secure the modular combination to the panel, while the remaining ducts 8 can be simply used to couple adjacent boxes one to the other, by employing the side-by-side positioning device 22.

With reference to the Fig. 6, in a particularly advantageous embodiment, the opposite coupling members 23 and 24 of the side-by-side positioning device 22 are mutually spaced by a frame 25 comprising two parallel crosspieces 25 and 27 which are connected and spaced by small bars 28, 29. Preferably, one of such crosspieces, and in particular the small bar 27, includes opposite locking members, of which, only the member 30 is visible in Figure 6, which are suitable to keep the two bottom walls 4 of two adjacent boxes together. For example, such locking members include teeth 30 liable to be coupled in the holes 12 provided in the bottom walls 4 in the proximity of the grooves 10.

Therefore, on the basis of what has been previously described, it is possible to understand how a box and a kit of parts in accordance with the present invention are such as to fully obviate the drawback cited above with reference to the prior art, thereby allowing creating several modular combinations of boxes according to the installation needs.

Certainly, those of ordinary skill in the art, with the aim of meeting specific, contingent needs, will be able to make a number of modifications and variations to the above-described box and kit of parts, all of which anyhow included within the protection scope of the invention, as defined by the annexed claims.

## Claims

1. A box (1) for electrical equipment, comprising a box-shaped body including a side wall (3a, 3b, 3c, 3d), and a bottom wall (4) joined to the side wall (3a, 3b, 3c, 3d), the side wall (3a, 3b, 3c, 3d) extending around an inlet port (2) of the box and defining an inner space (5) cooperating with said port (2) along with the bottom wall (4),
**characterized in that**
the box (1) includes defining means (10) suitable to define at least one side wall (3b, 3d) removable portion in order to put a further box (21) beside the box (1), in a modular manner and on the side of said removable wall portion.

2. The box (1) according to claim 1, wherein the defining means (10) at least partially run across the box (1) bottom wall (4).

3. The box (1) according to claim 2, wherein the defining means (10) include:
- a central portion running across the bottom wall (4); and
- two opposite end portions going up from the bottom wall (4) on the box (1) side wall (3), up to the box (1) port (2).

4. The box (1) according to any preceding claim, wherein said defining means include at least one groove (10) defining such wall (3b, 3d) removable portion and which is such as to act as a guide for a cutting tool which can be employed in order to remove said removable side wall portion (3b, 3d).

5. The box (1) according to claim 4, wherein such groove (10) is obtained in the thickness of the box (1) body, so as to promote the removal of said side wall (3b, 3d) removable portion.

6. The box (1) according to claim 5, wherein such groove (10) is obtained on a surface of the box (1) arranged on the box (1) side facing the inner space (5).

7. The box (1) according to any preceding claim 4 to 6, wherein the box (1) includes two essentially completely removable opposite side walls (3b, 3d).

8. The box (1) according to claim 7, wherein the defining means include a first groove (10) which, running across the bottom wall (4), extends essentially parallel to one of said removable side walls (3b), and a second groove (10) which, running across the bottom wall (4), extends essentially parallel to the other removable wall (3d).

9. A kit of parts (30) including at least two boxes (1, 20, 21) put side by side one to the other according to any one of the preceding claims, said at least two boxes which are put side by side having corresponding side wall portions removed in order to create a modular combination of boxes.

10. The kit of parts (30) according to the claim 9, further including a side-by-side positioning device (22) suitable to connect and keep said two boxes which are put side by side together by cooperating with side wall portions thereof adjacent to said side wall portions removed, said device (22) being such as to structurally reinforce said modular combination.

11. The kit of parts (30) according to claim 10, wherein said side-by-side positioning device (22) includes opposite coupling members (23, 24), each of which is such as to make a side wall portion of one of the two boxes and a correspondent side wall portion of the other box mutually integral.

12. The kit of parts (30) according to claim 11, wherein said opposite coupling members (23, 24) are spaced by a frame (25) comprising two parallel crosspieces (25, 27) which are connected and spaced by small bars (28, 29).
